# EUROPEAN PATENT APPLICATION

(11) **EP 1 325 773 A1**
(43) Date of publication of application: **09.07.2003**
(21) Application number: 01961249.8
(22) Date of filing: 31.08.2001
(51) Int. Cl.: B01D 46/02, B04C 5/20

(54) **METHOD AND DEVICE FOR COOLING AND COLLECTING DUST FROM EXHAUST GAS CONTAINING SOOT AND DUST**

(30) Priority: 06.09.2000 JP 2000269572; 12.09.2000 JP 2000275856
(71) Applicant: NKK CORPORATION, Tokyo 100-0005 (JP)
(72) Inventor: HAMAGUCHI, Keizo, c/o NKK Corporation, Tokyo 100-0005 (JP); SHIMIZU, Hiroshi, c/o NKK Corporation, Tokyo 100-0005 (JP)
(74) Representative: HOFFMANN - EITLE
(86) International application number: JP0107529
(87) International publication number: WO02020128

(57) **Abstract**

For reducing area to install the flue gas cooling apparatus, the flue gas containing dust is cooled and the dust is collected while suppressing the generation of dioxins. An integrated apparatus for cooling the gas and for collecting the dust, and a method thereof are disclosed. The integrated apparatus comprises a plurality of dust collecting sections located in bag filters and a cooling section positioned beneath the dust collecting sections. A temperature-reducing tower which comprises double cylinders, or an inner cylinder and an outer cylinder, is provided with a dust collecting section that collects dust by letting the flue gas swirl to induce inertial force and a cooling section that cools the flue gas after removing the dust therefrom.

## Description

### FIELD OF THE INVENTION

The present invention relates to an apparatus for cooling flue gas containing dust, emitted from various operations including incineration, heating, and melting, and for collecting the dust therefrom and to a method therefor. More specifically, the present invention relates to an apparatus and a method particularly effective in application for the cases that the flue gas contains organic halide such as dioxins.

### DESCRIPTION OF THE RELATED ARTS

There is an example of prior art relating to the apparatus and the method.

That is, a hot flue gas at 800°C or higher temperature, emitted from incinerator or the like, passes through a thermal energy recovery means such as boiler and economizer, and is cooled, for example, to temperatures of from 250 to 350°C. The flue gas is then further cooled by a water-spray type temperature-reducing tower to temperatures of 200°C or below where less dioxins are generated. After that, the flue gas is introduced to a bag filter, which is a reactive dust collection unit. The term "reactive dust collection unit" means a type applied to the cases that flue gas contains trace amount of toxic components such as acidic ingredients such as HCl and such as dioxins. In other words, the term indicates a type in which the toxic components are removed in the course that hydrated lime or activated carbon is added to the flue gas to collect dust in the flue gas. If the flue gas does not contain toxic components, the bag filter functions simply as a dust collection unit.

In any case, the prior art adopts the temperature-reducing tower that cools the flue gas to a temperature suitable for the bag filter, and adopts the bag filter that performs at least dust collection, separately.

For the prior art, an example of flue gas treatment process at an incineration plant and an example of apparatus for cooling flue gas containing dust and for collecting the dust therefrom in the flue gas treatment plant are described in the following referring to the drawings. In the specification of the application and in the claims thereof, the terms "upper part" and "lower part" indicate relative positioning in a unit concerned. Furthermore, the term's "upstream" and "downstream" means that a unit concerned is located at upstream side or at downstream side, respectively, along the flow of flue gas.

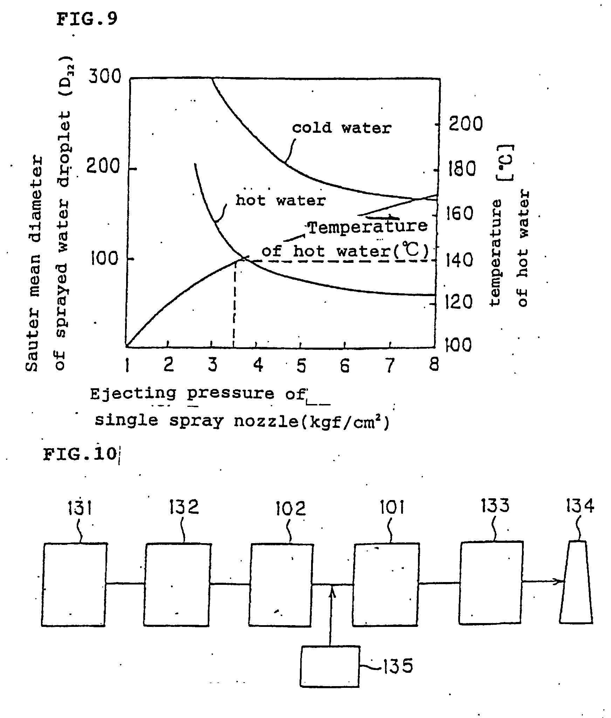

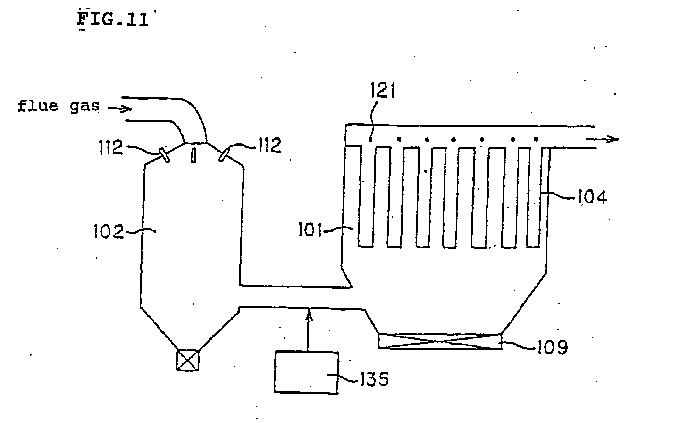

Fig. 10 is a flow diagram illustrating an example of flue gas treatment process in a conventional incineration plant. Fig. 11 is a rough longitudinal cross sectional view illustrating an apparatus for cooling flue gas and for collecting dust therefrom in the prior art.

First, an example of the flue gas treatment at an incineration plant according to the prior art is described referring to Fig. 10.

A hot flue gas at 800°C or higher temperature emitted from an incinerator 131 passes through a thermal energy recovery means such as a boiler 132 and an economizer (not shown), and is cooled, for example, to temperatures of from 250 to 350°C. Then, the flue gas is further cooled in a water-spray type temperature-reducing tower 102 to temperatures of 200°C or below where less dioxins are generated. After that, the flue gas is introduced to a bag filter unit 101, which is a reactive dust collection unit.

As described above, the term "reactive dust collection unit" means a type applied to the cases that flue gas contains trace amount of toxic components such as acidic ingredients such as HCl and such as dioxins. The reactive dust collection indicates a type in which the toxic components are removed in the course that hydrated lime or activated carbon is added to the flue gas to collect dust in the flue gas. If, however, the flue gas does not contain toxic components, the bag filter 101 functions simply as a dust collection unit.

In the case that the reactive dust collection is applied, hydrated lime or activated carbon is supplied to the flue gas from a chemicals charge unit 135 using a pneumatic conveying means or the like. Thus, during the course of dust collection at the bag filter unit 101, the acidic ingredients and dioxins in the flue gas are removed. The flue gas leaving the bag filter unit 101 is then introduced, at need, to a denitration catalyst tower 133, where nitrogen oxides in the flue gas are removed. After that, the flue gas is vented to atmosphere via a stack 134.

Next, an example of apparatus for cooling flue gas and for collecting dust therefrom in the prior art is described referring to Fig. 11.

The apparatus for cooling flue gas and for collecting dust therefrom in the prior art comprises the bag filter unit 101, and the temperature-reducing tower 102, which is suitable for the bag filter unit 101, to cool the flue gas, for example, to temperatures of 200°C or below. For example, the flue gas that is introduced to the temperature-reducing tower 102 is at around 250°C. A water-spray type spray nozzle 112 mounted at upper part of the tower sprays water droplets into the flue gas, thus the flue gas is cooled to a specified temperature of not higher than 200°C owing to the latent heat of vaporization of the sprayed water. The temperature-reducing tower 102 performs complete vaporization so as not to generate wastewater. Accordingly, the volume of the temperature-reducing tower 102 is designed so as the retention time of the flue gas in the tower to become a specified time, for example, 5 to 15 seconds.

Chemicals such as hydrated lime or activated carbon are charged to the flue gas that left the temperature-reducing tower 102, at need, using a chemicals charge unit 135. Then, the flue gas is introduced to the bag filter unit 101, where the dust and the chemicals in the flue gas are collected by a plurality of cylindrical filter cloth 104 in the bag filter unit 101, and simultaneously, the toxic components in the flue gas are removed. The collected dust in the bag filter unit 101 is discharged therefrom via a dust discharge section 109. The bag filter unit 101 is operated to maintain the efficiency of shaking off the dust using air ejection pipes 121 as a dust shake off means located above the filter cloth 104. For example, the operation is conducted at a low filter speed not higher than 1.0 m/min. To satisfy the specified filter speed, plurality of filter cloth 104 is installed.

The following is another example of the prior art.

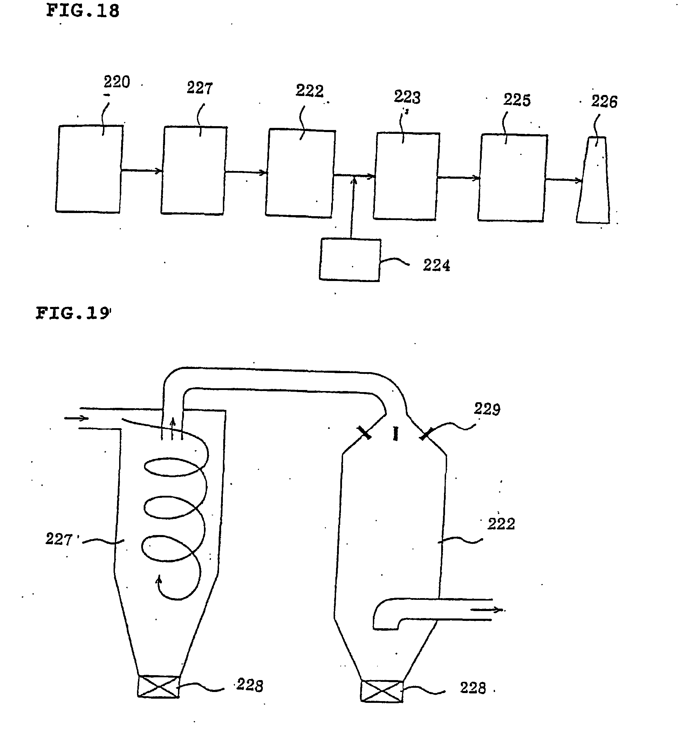

Fig. 18 is a flow diagram of another flue gas treatment process that treats hot flue gas emitted from an incinerator or the like. The hot flue gas at 400°C or higher temperature and generating less amount of dioxins, after leaving an incinerator 220 and after recovered heat thereof at a boiler or the like, is introduced to a high temperature dust collection unit 227 such as a cyclone, a ceramic filter, and a granule bed (a filter using sand as the filter bed), where dust (fly ash) in the flue gas is removed at temperatures of 400°C or above. Then, the flue gas is cooled in a flue gas temperature-reducing tower 222 to not higher than 200°C, for example, to 180°C, or to the temperatures suitable for the bag filter unit as a reactive dust collection unit 223. Into the cooled flue gas, hydrated lime is sprayed from a chemicals charge unit 224 to remove acidic ingredients from the flue gas. Thus, the reactive dust collection process in the reactive dust collection unit 223 removes the acidic ingredients such as HCl and SOx in the flue gas. Alternatively, caustic soda is sprayed from a wet flue gas scrubbing tower (not shown) to remove the acidic ingredients from the flue gas. The flue gas that left the reactive dust collection unit 223 is then introduced to a denitration catalyst tower 225, at need, to remove nitrogen oxides from the flue gas, and is vented to atmosphere via a stack 226.

Further example of an apparatus relating to cooling flue gas and collecting dust therefrom according to the prior art is described in the following referring to Fig. 19. Flue gas at 400°C or higher temperature after leaving an incinerator or the like is introduced to a cyclone as the high temperature dust collection unit 227. During the flue gas swirls in the cyclone, dust (fly ash) in the flue gas falls down to lower part of the cyclone, then the dust is discharged from the system via a dust discharge section 228. The flue gas left from the cyclone is introduced to the flue gas temperature-reducing tower 222. A water-spray type spray nozzle 229 mounted at upper part of the tower sprays water droplets into the flue gas, thus the flue gas is cooled to a specified temperature of not higher than 200°C suitable for the succeeding reactive dust collection unit (not shown)owing to the latent heat of vaporization of the sprayed water. The temperature-reducing tower 222 performs complete vaporization so as not to generate wastewater. Accordingly, the volume of the temperature-reducing tower 222 is designed so as the retention time of the flue gas in the tower to become a specified time, for example, 5 to 15 seconds. The flue gas left from the flue gas temperature-reducing tower 222 is subjected to an additional treatment as shown in Fig. 18.

### SUMMARY OF THE INVENTION

As described above, the apparatus for cooling flue gas and for removing dust therefrom according to the prior art adopts the temperature-reducing tower for cooling the flue gas and the bag filter unit for collecting dust from the flue gas, separately, so that the necessary area to install these units is significantly wide. That is, the wide installation area induces a problem of extremely high initial cost for the flue gas treatment plant.

The temperature-reducing tower that cools the flue gas to temperatures of 200°C or below by water spray cools the flue gas by vaporizing the sprayed water droplets formed by spray nozzle without generating waste water. Thus, if the sprayed water droplets are not sufficiently fine or if the cooled flue gas is as low as 150°C, the complete vaporization of water droplets needs, for example, about 5 to 15 seconds of retention time for the flue gas, and the corresponding volume and installation area of the temperature-reducing unit are required to satisfy the condition.

Furthermore, to assure reaction efficiency and dust shake off efficiency, the bag filter unit that makes the flue gas react and collects the dust from the flue gas is often designed to have the filter speed of, for example, around 1.0 m/min or less. Accordingly, the number of filter cloth increases, and the installation area also increases.

Consequently, the temperature-reducing tower and the bag filter unit have to occupy wider installation area as independent units. As a result, the problem of increasing initial cost caused from the increase in the above-described installation area has become more serious.

In addition, the method of prior art shown in Fig. 10 cannot remove dust (fly ash) which causes the generation of dioxins at high temperature region of 400°C or above where dioxins are generated very little. Therefore, dioxins are left in the flue gas along with dust, and dioxins are required to be removed in a separate unit such as a succeeding reaction bag filter unit and a dioxins catalyst tower (not shown). Furthermore, since the dust (fly ash) collected by the bag filter contains significant amount of dioxins, the dioxins in the dust have to be treated separately. That is, it is necessary to additionally install an injection unit for activated coal (a chemicals charge unit 135) for removing dioxins through the spray of activated coal at upstream side of the bag filter unit or install a dioxins catalyst tower, and also to install a heat treatment unit to reduce the dioxins in the collected fly ash, or the like. Thus, the treatment cost becomes significantly high.

As for the method of prior art shown in Fig. 10 and Fig. 19, the dust (fly ash) which causes the generation of dioxins is preliminarily removed at high temperatures of 400°C or above where dioxins are generated very little, thus the prior art has an advantage of eliminating the succeeding dioxins removal unit. Furthermore, since the dust (fly ash) collected at 400°C or higher temperatures contains very little dioxins, the dioxins in the fly ash are not required to be treated. However, since the dust collection unit 227 that collects dust at high temperatures and the succeeding flue gas temperature-reducing unit 222 that cools the flue gas are separate units from each other, the installation area for these units is unnegligibly wide. In other words, large installation area requirement induces a critical problem of extremely high initial cost for the flue gas treatment plant.

The present invention was completed to solve the above-described problems. That is, an object of the present invention is to provide an apparatus for cooling flue gas and for collecting dust therefrom, which apparatus is an integrated unit for dust-collection and gas-cooling, which reduces the above-described wide installation area to achieve compact design. As a means to achieve the object, the present invention discloses the following-described contents.

As the first aspect of the present invention, an apparatus for cooling and collecting flue gas containing dust therefrom comprises:
a flue gas introductory duct which is connected with lower part of the apparatus ;
a cooling section which is located at lower part of the apparatus for cooling and collecting the flue gas and located at downstream side of the flue gas introductory duct towards a flow direction of the flue gas; the cooling section comprising,
   means for cooling the flue gas,
   a cooling space having the cooling means inside of the cooling space,
a dust collecting section which is located at upper part of the apparatus for cooling and collecting the flue gas and located at downstream side of the cooling section towards the flow direction of the flue gas, the dust collecting section having, a bag filter having a plurality of filter cloth for collecting the dust contained in the flue gas;
a flue gas discharge duct connected with upper part of the apparatus for cooling and collecting the flue gas and located at downstream side of the dust collecting section towards the flow of the flue gas; and
a dust discharge section for discharging the collected dust.

As the second aspect of the present invention, a method for cooling and collecting flue gas containing dust therefrom comprises the steps of:
cooling the flue gas containing dust in a cooling space by letting a cooling medium pass through inside of cooling pipes to indirectly exchange heat between the flue gas passing outside of the cooling pipes and the cooling medium;
collecting the dust from the cooled flue gas, using filter cloth; and
removing the dust from the filter cloth by shaking thereof.

As the third aspect of the present invention, an apparatus for cooling and collecting flue gas therefrom comprises:
a temperature-reducing tower which has double cylinders consisting of an inner cylinder and an outer cylinder, the inner cylinder and the outer cylinder being located concentrically to each other;
a flue gas introductory duct, being connected with upper part of the outer cylinder, and being located in tangential direction to the periphery of the outer cylinder;
a dust collecting section which comprises an annular space formed between the inner cylinder and the outer cylinder;
a passage section for introducing the flue gas into the inner cylinder, being located at lower part of the inner cylinder; and,
means for cooling the flue gas, having a cooling space to cool the flue gas after removing the dust therefrom.

As the fourth aspect of the present invention, a method for cooling and collecting flue gas containing dust comprises the steps of:
turning the flue gas containing dust in an annular space formed between double cylinders, or between an outer cylinder and an inner cylinder, thus collecting the dust from the flue gas by the induced inertial force; and
cooling the flue gas after removing the dust by introducing the flue gas.

### BRIEF DESCRIPTION OF THE DRAWINGS

Fig. 1 shows a schematic drawing of a cooling means in a cooling space relating to an example of a mode of apparatus for cooling flue gas and for collecting dust therefrom according to the present invention.
Fig. 2 shows a rough longitudinal cross sectional view as another example of a mode of apparatus for cooling flue gas and for collecting dust therefrom according to the present invention.
Fig. 3 shows a rough longitudinal cross sectional view as other example of a mode of apparatus for cooling flue gas and for collecting dust therefrom according to the present invention.
Fig. 4 shows a rough cross sectional view along B-B line in Fig. 3, showing outline of nozzle arrangement.
Fig. 5 shows a rough longitudinal cross sectional view of further example of a mode of apparatus for cooling flue gas and for removing dust therefrom according to the present invention.
Fig. 6 shows a rough cross sectional view along C-C line in Fig. 5, showing outline of nozzle arrangement.
Fig. 7 shows a rough cross sectional view along A-A line in Fig. 1.
Fig. 8 is a graph showing the relation between the maximum water droplet diameter, the Sauter's mean diameter, and the vaporization time of water droplets.
Fig. 9 is a graph showing the relation between the ejection pressure of a single-fluid spray nozzle and the Sauter's mean diameter of the sprayed water droplets.
Fig. 10 shows a flow diagram of an example of flue gas treatment process in an incineration plant according to prior art.
Fig. 11 shows a rough longitudinal cross sectional view of an example of apparatus for cooling flue gas and for collecting dust therefrom according to prior art.
Fig. 12 shows a schematic drawing and a cross sectional view thereof in the Best Mode 2 according to the present invention.
Fig. 13 shows a schematic drawing in the Best Mode 3 according to the present invention.
Fig. 14 shows a schematic drawing in the Best Mode 4 according to the present invention.
Fig. 15 shows the relation between the maximum water droplet diameter and the vaporization time of water droplets.
Fig. 16 is a schematic drawing of the Best Mode 5 according to the present invention.
Fig. 17 is a diagram showing the relation between the ejection pressure, the Sauter's mean diameter of the sprayed water droplets, and other characteristics on an integrated type spray nozzle.
Fig. 18 shows a block diagram of an example of another flue gas treatment flow according to prior art.
Fig. 19 shows a schematic drawing of an example of apparatus relating to dust collection and cooling of flue gas according to prior art.

### DESCRIPTION OF THE PREFERRED EMBODIMENT

The apparatus for cooling flue gas and for collecting dust therefrom according to the present invention is described in the following referring to the drawings.

### (PREFERRED EMBODIMENT 1)

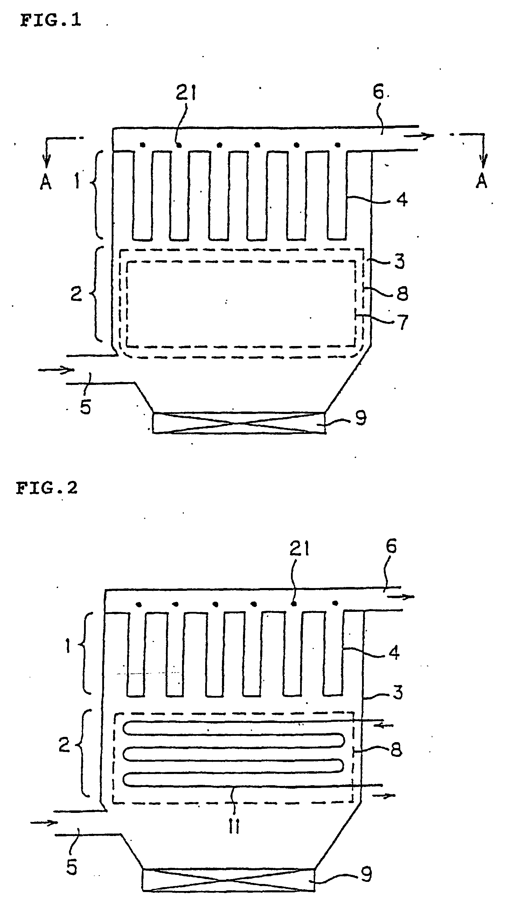

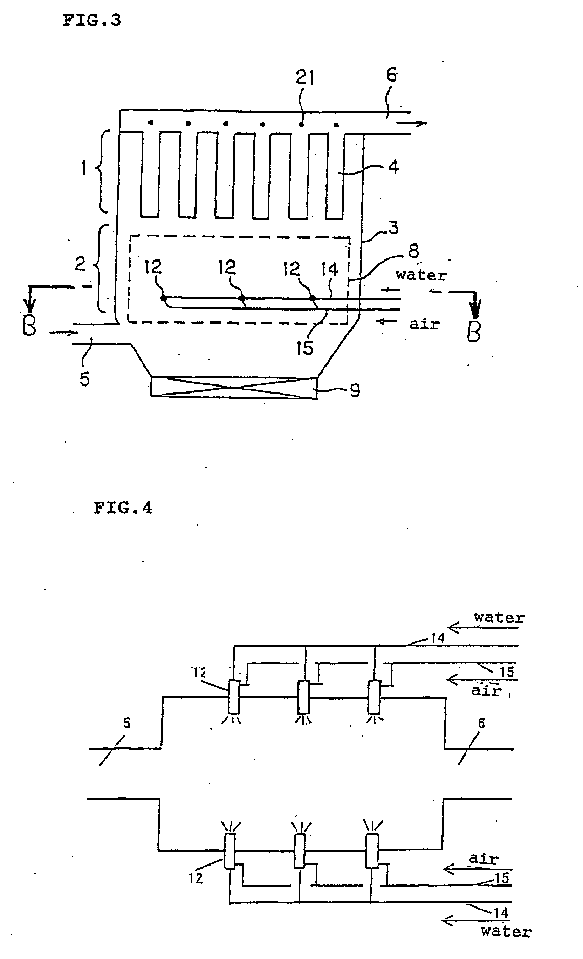

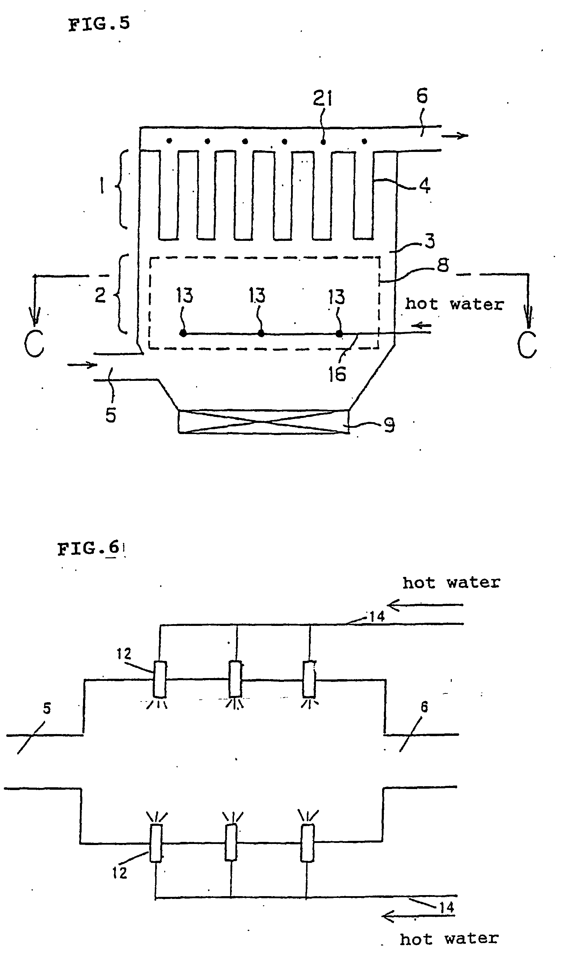

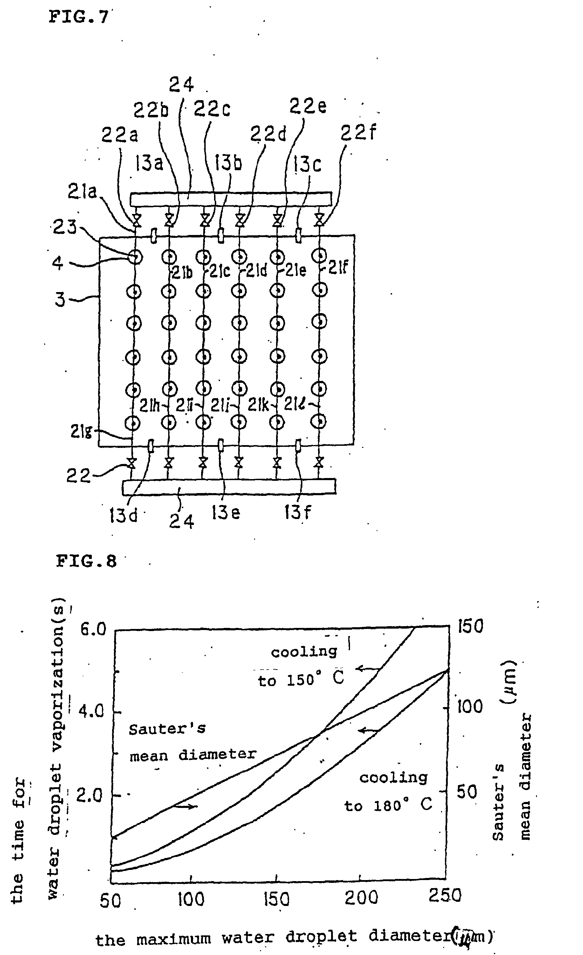

Fig. 1 shows an example of the modes for carrying out the present invention, giving a schematic drawing of an apparatus for cooling a flue gas and for collecting dust therefrom using a bag filter unit. Fig. 1 illustrates a cooling means in a cooling space. Fig. 2 shows a rough longitudinal cross sectional view of an apparatus for cooling the flue gas and for collecting dust therefrom using a bag filter unit in another example according to the present invention. Fig. 3 shows a rough longitudinal cross sectional view of an apparatus for cooling the flue gas and for collecting dust therefrom using another bag filter unit according to the present invention. Fig. 4 shows a rough cross sectional view along B-B line in Fig. 3, illustrating nozzle rough arrangement. Fig. 5 shows further example of the present invention, illustrating a longitudinal cross section of an apparatus for cooling the flue gas and for collecting dust therefrom using a bag filter unit. Fig. 6 shows a rough cross sectional view along C-C line in Fig. 5, illustrating nozzle rough arrangement. Fig. 7 shows a rough cross sectional view along A-A line in Fig. 1. Fig. 8 is a graph showing the relation between the maximum water droplet diameter, the Sauter's mean diameter, and the vaporization time of water droplets. Fig. 9 is a graph showing the relation between the ejection pressure and the Sauter's mean diameter of sprayed water droplets on a single-fluid spray nozzle.

In Fig. 1 through Fig. 7, the reference number 1 designates a dust collecting section, 2 designates a cooling section, 3 designates a bag filter unit body, 4 designates a filter cloth, 5 designates a flue gas introductory duct, 6 designates a flue gas discharge duct, 7 designates a cooling means, 8 designates a cooling space, 9 designates a dust discharge section, 11 designates an indirect heat exchanger as a cooling means, 12 designates a spray nozzle (cold water spray), 13 (13a through 13f) designates a spray nozzle (hot water spray), 14 designates a cold water supply pipe, 15 designates an air supply pipe, 16 designates a hot water supply pipe, 21 (21a through 21L) designates an ejection pipe, 22 (22a through 22L) designates a solenoid valve, 23 designates an ejection opening on the ejection pipe, and 24 designates a header.

Fig. 1 is a schematic drawing of a flue gas cooling unit using a bag filter unit, which flue gas cooling unit has a cooling section comprising a cooling means for cooling the flue gas and a cooling space, being located within the bag filter unit body and beneath a dust collecting section comprising plurality of filter cloth for cooling the flue gas containing dust and for collecting the dust therefrom.

A flue gas, for example, at 250°C, is introduced from the flue gas introductory duct 5. The flue gas is cooled during a period of staying in the cooling space 8 to temperatures of 200°C or below, for example, 180°C, where less dioxins are generated, by the flue gas cooling means 7 such as an indirect heat exchanging means and a water spray means using spray nozzles. The cooled flue gas is then introduced to the dust collecting section 1 comprising plurality of cylindrical filter cloth 4 positioned above the cooling space 8, where the dust is collected from the flue gas. After removed the dust, the flue gas passes through the flue gas discharge duct 6 to receive separate treatment such as denitration.

Although the drawing does not show, when the flue gas contains acidic ingredients such as HCl and SOx, and organic halides such as dioxins, chemicals such as hydrated lime, activated carbon, and the like are selected for removing these toxic components, at need. These chemicals may be sprayed into the flue gas using a chemicals charge unit (not shown) to remove the toxic components during the process of dust collection by the filter cloth 4.

The point of chemicals spray may be in the flue gas introductory duct 5 or at the outer wall of the bag filter unit body 3 in the cooling section 2, and the point may be adequately selected. On the other hand, the dust collected by the filter cloth 4 is shaken off by high pressure air ejected from a pulse jet ejection pipe 21. The shaken off dust is then discharged from the dust discharge section 9 to outside of the bag filter unit body 3 for receiving a separate treatment.

As described above, the cooling section 2 to cool the flue gas is positioned beneath the dust collecting section 1 comprising plurality of filter cloth 4. Consequently, conventionally required flue gas cooling unit such as water-spray type temperature-reducing tower can be eliminated, thus the installation area for the flue gas cooling unit is not necessary. As a result, significant space saving is realized to significantly reduce the initial cost of the flue gas treatment plant.

In addition, when the flue gas cooling means cools the flue gas to 200°C or below, preferably to 180°C or below, the generation of dioxins can be suppressed. Furthermore, if hydrated lime is added to the flue gas, the efficiency for removing acidic ingredients such as HCl can be increased.

Fig. 2 shows another example of the present invention, in which the cooling means 7 in Fig. 1 is the indirect heat exchanger 11 which is installed in the cooling space 2 beneath the dust collecting section 1 and which introduces a cooling medium. Fig. 2 shows a rough longitudinal cross sectional view illustrating an apparatus for cooling flue gas and for collecting dust therefrom using a bag filter unit. For the parts same as those in Fig. 1, no further description is given in the following.

The indirect heat exchanger 11, which allows passing cold water, cold air, or other cooling medium through the cooling pipes, is adopted as the cooling means 7. The cooling means 7 is located in the cooling section 2 in the bag filter unit body 3, thus the heat of flue gas is exchanged indirectly with the cooling medium to cool the flue gas. The flue gas cooling performance generally depends on the total area of cooling pipes (effective heat exchange area), and temperature and kind of the cooling medium. These variables are adequately determined to achieve the specified flue gas temperature.

The dust collected on the filter cloth 4 is shaken off at a predetermined interval. Although the dust attaches to the cooling pipes of the indirect heat exchanger 11, the attached dust may be removed during a regular inspection time, or may be shaken off at a regular interval by installing a soot blow unit of steam type or air type on an outer wall of the bag filter unit body 3.

Since the cooling means adopts the indirect heat exchanger 11 to introduce cold water, cold air, or other cooling medium inside of the cooling pipes to cool the flue gas, there occurs no possibility of wet-cloth problem, which occurs in prior art using water-spray type spray nozzle that allows non-vaporized water droplets reaching the filter cloth to wet them. Naturally the same performance and effect with those in the example of Fig. 1 are available.

Fig. 3 shows a rough longitudinal cross sectional view of further example of bag filter unit according to the present invention, installing the cooling means 7 in Fig. 1 on outer wall of the bag filter unit body 3 (cooling section 2). The cooling means has water-spray type spray nozzles producing water droplets having 80 µm or smaller Sauter's mean diameter or having 160 µm or smaller maximum droplet diameter. The spray nozzle is a two-fluid spray nozzle 12, which ejects cold-water and air at a time. For the parts same as those in Fig. 1, no further description is given in the following.

Fig. 4 shows a rough cross sectional view along B-B line in Fig. 3, illustrating the arrangement of two-fluid spray nozzles 12. Fig. 3 does not show filter cloth and other parts. Both the cold water supply pipe 14 and the air supply pipe 15 are connected to the spray nozzles 12, thus the cold water and the air are sprayed under respective predetermined pressures to spray specific amount of water necessary for cooling the flue gas to a specified temperature. Fig. 3 does not show pressure gauges for spray water and spray air, flow meters, check valves, and other parts, though these parts are mounted at adequate positions. The spray nozzle 12 has the spray performance to give the water droplets having 80 µm or smaller Sauter's mean diameter or having 160 µm or smaller maximum droplet diameter.

The sprayed droplets have a distribution in terms of droplet diameter. For example, the distribution can be approximated by Rosin-Rammler distribution, semilogarithmic distribution, or, in some cases, normal distribution. The determination of droplet diameter is conducted by Laser-Doppler method (non-contact method) or conventional immersion method (direct sampling method). Commercially available spray nozzles often give various kinds of performance including Sauter's mean diameter. Since vaporization occurs on the surface of droplet, Sauter's mean diameter, which emphasizes the area, or area average diameter, is often adopted. Sauter's mean diameter (area average diameter) is often written as D32, which is calculated by Σ(nd³)/Σ(nd²). Smaller Sauter's mean diameter means wider outer surface area per unit weight, which means the increase in the vaporization rate to shorten the vaporization time.

Regarding the maximum droplet diameter, since the immersion method deals with finite number of droplets, the largest droplet diameter among the sampled droplets may be adopted. When the above-described distributions (weight or volume basis) are adopted for approximation, the diameter equivalent to that of 1% plus sieve may be adopted. Since larger water droplet takes longer time for vaporization, the calculation of the time until the whole of sprayed water droplets are vaporized is often based on the largest droplet diameter. That is, smaller maximum droplet diameter takes less vaporization time, and gives less retention time of the flue gas.

An investigation carried out by the inventors of the present invention revealed that, relating to the sprayed water droplets using a spray nozzle, the Sauter's mean diameter and the maximum droplet diameter have a range of ratios from 1 : 1.5 to 1 : 3. Accordingly, if either of the Sauter's mean diameter or the maximum droplet diameter is known, the other one can be estimated to some degree.

Fig. 8 shows an example of investigations conducted by the inventor of the present invention, giving a graph of the relation between the maximum water droplet diameter and the time for water droplet vaporization, (an analytical result in one-dimensional flow field taking into account of the distribution of droplet diameter, the flue gas composition, and the like). The vertical axis at right side indicates the case that the Sauter's mean diameter is half the maximum droplet diameter.

As seen in the figure, when the maximum droplet diameter or the Sauter's mean diameter becomes small, the time for vaporization becomes short, and when the cooling temperature of flue gas becomes low, the time for vaporization becomes long. If the cooling to 180°C is assumed at the maximum droplet diameter of 160 µm (Sauter's mean diameter of 80 µm), the time for vaporizing a water droplet becomes about 2 seconds. And, if the cooling to 150°C is assumed, the time becomes about 3 seconds. Since the time for vaporizing water droplet is the vaporization time in a stable field where no segregation flow of flue gas occurs, the calculation of the flue gas retention time necessary for cooling the flue gas in an actual apparatus needs to multiply a safety factor of around 1.5 to 3.

In another investigation conducted by the inventors of the present invention, a spray nozzle giving 100 µm of Sauter's mean diameter (larger than 80 µm) and giving the maximum average diameter of 220 µm (larger than 160 µm) generated cases of difficulty in dust shake off owing to the formation of a wet face on the filter cloth 4 of the dust collecting section 1. When, however, the Sauter's mean diameter was reduced to 80 µm or less, and the maximum droplet diameter was reduced to 160 µm or less, no trouble of wet face formation on the filter cloth occurred.

Although the calculated vaporization time of water droplet varies relatively linearly with the change of droplet diameter, it was concluded that the occurrence of wet face on the filter cloth has a certain limit based on the above-obtained result. That is, the limit to prevent the formation of wet face on the filter cloth is selected as the 80 µm of Sauter's mean diameter or the 160 µm of the maximum droplet diameter.

The flue gas is cooled using a cooling means of water-spray type spray nozzle to give the water droplets having 80 µm or smaller Sauter's mean diameter or having 160 µm or smaller maximum droplet diameter, or fine droplets. Therefore, even when the cooling temperature is as low as 200°C or below, the water droplets are completely vaporized within very short vaporization time, thus the flue gas can be cooled within a short time, which avoids the possibility of wetting the filter cloth resulted from reaching the non-vaporized water droplets to the filter cloth at the dust collecting section. Naturally the same performance and effect with those in other examples according to the present invention are available.

Fig. 5 shows a rough longitudinal cross sectional view of an apparatus for cooling flue gas and for removing dust therefrom using a bag filter unit according to the present invention, which apparatus installs the cooling means? of Fig. 1 on outer wall of the bag filter unit body (cooling section 2), and adopts spray nozzles that spray hot water above the boiling point. For the parts same as those in Fig. 1, no further description is given in the following.

Hot water having 100°C or higher temperature, produced from high pressure steam in an additional facility, from external heating means, or the like is stored in a hot water tank (not shown). The hot water is then sprayed into the flue gas in the cooling space 8 via the connected single-fluid spray nozzle 13. Although the hot water is 100°C or above, it can cool the flue gas owing to the large latent heat of vaporization. By selecting the temperatures of 100°C or above and pressures of 1 kgf/cm² or more for the hot water, the spraying at the tip of the nozzle instantaneously creates fine droplets owing to the flash vaporization, which increases the flue gas cooling efficiency. Fig. 5 does not show pressure gauges for spray water and spray air, flow meters, check valves, and other parts, though these parts are mounted at adequate positions.

In this manner, the cooling means adopts a spray nozzle that sprays hot water at its boiling point or above, or 100°C or above and 1 kgf/cm² or more, thus instantaneously forming fine water droplets at the tip of the nozzle to cool the flue gas owing to the flash vaporization. Consequently, even when the cooling temperature is as low as 200°C or below, the water droplets are completely vaporized within very short vaporization time, thus the flue gas can be cooled within a short time, which avoids the possibility of wetting the filter cloth resulted from reaching the non-vaporized water droplets to the filter cloth at the dust collecting section. In addition, since a single-fluid spray nozzle is adopted, any compressor for spraying air, which is necessary in the case of two-fluid spray nozzle, is not required, thus relatively inexpensive spray nozzle can be applied. Naturally the same performance and effect with those in other examples are available.

For the bag filter unit shown in Fig. 5, the hot water (which is described in claim 10) sprayed into the cooling space 8 preferably has 140°C or higher temperature or 3.5 kgf/cm² or higher pressure.

Fig. 9 shows an example of the studies and investigations carried out by the inventors of the present invention, giving a graph of comparison of sprayed water droplet diameter between cold water (normal temperature) and hot water (water boiling point or above).

According to the example, the hot water gave smaller Sauter's mean diameter less than half that of the cold water, which shows that hot water spray, forms fine water droplets. Furthermore, it was found that the ejection pressure of hot water at 3.5 kgf/cm² gives about 140°C of the water temperature and makes the Sauter's mean diameter to 100 µm or less. That is, to attain stable fine water droplets, it is preferable that the pressure of the hot water tank (not shown) to produce or store the hot water and the ejection pressure of the hot water is 3.5 kgf/cm² or more (temperature of 140°C or above).

In this manner, when the ejecting hot water is prepared at 140°C or above or 3.5 kgf/cm² or more, hot water with higher pressure can be obtained, and the flash vaporization effect on spraying into the flue gas is increased, which further assures the functions in other examples of the present invention.

If the temperature becomes lower than 140°C or the pressure becomes lower than 3.5 kgf/cm², satisfactory pressure cannot be obtained with a known spray nozzle, for example, as the means for spraying hot water, which may induce trouble in obtaining necessary amount of water spray. Furthermore, when heat dissipation occurs in a passage or the like for supplying hot water to the hot water spray means, sufficient spraying of hot water may not be obtained. Consequently, although not positively recommended, if the water is above the boiling point, or 100°C or above or 1 kgf/cm² or more, within the range of above-described temperature and pressure conditions, the degree of performance only degrades to some extent.

Fig. 7 shows a schematic horizontal cross sectional view of the bag filter unit of Fig. 3 and Fig. 5, in which plurality of spray nozzles are arranged in peripheral direction on outer wall of the bag filter unit body at a fixed spacing. The figure does not show the hot water supply pipe 16 and other parts attached to the spray nozzle 13.

Since the example arranges plurality of spray nozzles at a specific interval, the flue gas cooling load for individual spray nozzles and the vaporization load within the space in the tower can be distributed to equalize. Furthermore, the apparatus achieves more efficient flue gas cooling, which further assures the performance of the present invention.

In Fig. 7, the dust shaking off action to the filter cloth 4 of the dust collecting section 1 is conducted at a definite interval in a sequent order to individual filter cloth 4. During the shaking off action, it is preferable that, during successive action for shaking off the dust for individual cloths, operation to intermittently stop water spraying through spray nozzle 12 or 13 in the vicinity of the filter cloth 4 being subjected to shake off the dust therefrom is given until the removal of the dust is completed at the filter cloth 4. Furthermore, it is preferable that the adopted method is sequentially applied to the spray nozzle 12 or the spray nozzle 13.

The method is described in more detail referring to Fig. 7 in which the hot water spraying single-fluid spray nozzle 13 shown in Fig. 5 is applied. In Fig. 7, a bag filter unit of pulse-jet backwashing type using compressed air is adopted as an example.

The pulse-jet air used for shaking off the dust deposited on the filter cloth is stored in a header 24 under a specified pressure, from which the pulse jet is ejected to the ejection pipe 21a via an attached ejection opening 23 by opening a solenoid valve 22a for a specified period, thus shaking off the dust on the three filter cloth 4 corresponding to the ejection pipe 21a, at a time. The time for pulse-jet ejection, or the time for opening the solenoid valve 22a, is, for example, 0.1 to 0.3 second. The pressure of pulse-jet is, for example, 2 to 6 kgf/cm²G.

Then, after a specified time has passed, a solenoid valve 22b is opened for a specified period to shake off the dust from the three pieces of filter cloth 4 corresponding to an ejection pipe 21b. During the period of these actions, the water spray of spray nozzle 13a in the vicinity of the filter cloth 4 relating to the ejection pipes 21a and 21b is stopped. Other spray nozzles 13b through 13f continue to spray during the period. Next, the shake off of dust by ejection pipes 21c and 21d is conducted. At this moment, the water spray from the spray nozzle 13b is stopped, and the spray nozzle 13a, which was stopped, resumes the water spray. Then, when the shake off of dust by ejection pipes 21e and 21f is conducted, the corresponding spray nozzle 13c stops the water spray, and the spray nozzle 13b which was stopped spraying resumes the water spray.

According to the example of Fig. 7, the number of rows of ejection pipes 21 and the filer cloths corresponding to each nozzle 13 is two. Accordingly, during the shaking off the dust by these two rows of filter cloth, the water spray of corresponding nearby spray nozzle 13 is stopped before beginning the shake off action.

After sequential application of the above-described operations (shaking off the dust by pulse jet ejection and stopping the water spray from spray nozzle) to the whole filter cloth rows and corresponding spray nozzles, the series of the shake off action is completed.

As described above, the water spray of the spray nozzles in the vicinity of the filter cloth under the shake off action is intermittently stopped until the shake off action of the filter cloth is ended. The action avoids the danger of abnormal spraying occurred from attaching the shook off and fallen dust to the ejection section of the spray nozzle, and avoids the danger of deposition of dust in the unit caused from wetted dust with the sprayed water. Furthermore, since the above-described action is sequentially given to all the filter cloth and to the spray nozzles, the flue gas cooling can be stable conducted while completing the shaking off action to all the filter cloth. Naturally the same effect with that of example which uses spray water having a specified temperature or above and a specified pressure or above can be attained.

The bag filter unit provided with the cooling section described in the example preferably form the cooling space 8 which allows the retention of the flue gas for a period of from 2 to 10 seconds.

When the bag filter unit that has the cooling section described in the example is applied to satisfy each of the above-described requirements, the retention time of the flue gas in the cooling space of the cooling section, or the time necessary for cooling the flue gas, can be set in a range of from 2 to 10 seconds. As a result, the bag filter unit can be designed in a relatively small volume.

The retention time of the flue gas of less than 2 seconds is not preferable because the cooling effect by the above-described various kinds of cooling means cannot fully be attained, and because, if the water spray is conducted by a spray nozzle, there is a possibility of generation of non-vaporized water droplets. The retention time of the flue gas of more than 10 seconds is not preferable because the volume of the flue gas cooling section becomes excessively large to result in an excessively large size of the bag filter unit, which leads the compact design effect of the present invention relatively small. If, however, the installation area has a margin, the upper limit of the 10 seconds of retention time is not necessarily applied. Since the setting of the retention time of flue gas, or the setting of the volume of cooling section, is affected also by the cooling temperature of the flue gas, further cooling to a lower temperature preferably adopts longer retention time of the flue gas within a range of from 2 to 10 seconds.

A mode for carrying out the present invention was described referring to Figs. 1 through 7. The following is supplemental description thereof. The bag filter unit provided with the cooling section according to the present invention is illustrated as examples in Figs. 1 through 7. For simplification, these figures show less number of filter cloth and of ejection pipes than the number in actual cases. For industrial application, the number of filter cloth is around 500, and the number of ejection pipes is around 50, for example, depending on the volume of flue gas, and, a single ejection pipe 21 is generally provided with about 5 to about 15 of ejection openings 23, thus conducting ejection against a group of 5 to 15 filter cloth arranged in linear at a time. Nevertheless, the industrial application is not limited by the above-described method.

Fig. 7 shows the two rows of filter cloth (ejection pipes) responding to each spray nozzle. Less number of spray nozzles naturally increases the number of rows of responding filter cloth. In addition, Fig. 7 shows the arrangement of the spray nozzles of total six, each three for upper and for lower parts. However, they may be arranged only three at upper part at an equal spacing. In the latter case, the responding number of rows of ejection pipes 21 (rows of filter cloth) becomes total four, two in upper part and two in lower part.

The backwash method of the bag filter unit provided with a cooling section according to the present invention was described before in the pulse jet method explanation. Nevertheless, same effect can be attained in a reverse blowing method in which air blow is applied to individual sectors in the inverse direction to the flow of flue gas.

The dust collecting section according to the present invention comprises plurality of filter cloth. The material of the filter cloth may be the one that having heat resistance to the flue gas temperature. Applicable materials for the filter cloth are selected from glass fibers, polyamide fibers, ceramic fibers, various kinds of chemical fibers, and the like, considering the acid resistance and other characteristics. The shape of the filter cloth is generally cylindrical. However, the shape is not limited to cylindrical one. The same effect with the filter cloth can be obtained by, for example, candle type ceramic filter and honeycomb type ceramic filters (a honeycomb structure with alternative opening between inlet side and outlet side).

The spray nozzle mounted in the cooling section 2 according to the present invention adopted a two-fluid spray nozzle for the case of cold water (normal temperature water) ejection, while air is ejected simultaneously. When the pressure of the spraying water is increased to 10 kgf/cm² or more, fine water droplets can be formed. Therefore, in that case, a single-fluid spray nozzle may be applied. When hot water is ejected, the single-fluid spray nozzle was adopted in the above-given example. However, a two-fluid spray nozzle that ejects hot water and air at a time may be applied. The latter case provides fine water droplets equal to or finer than those of the single-fluid spray nozzle.

The spray nozzle mounted in the cooling section 2 according to the example may have a protective pipe on outer periphery thereof to assure the durability of the nozzle. Furthermore, dust deposition on the nozzle can be avoided by ejecting purge air between the nozzle and the protective pipe, or by simply ejecting purge air from outer periphery or nearby the nozzle. The volume of water or hot water being ejected from the spray nozzle is controlled by a feedback controller or the like to establish a specified temperature of the cooled flue gas while monitoring the temperature at the outlet of the dust collecting section. Alternatively, feed forward control or combined control method can also be applied. To remove acidic ingredients and dioxins in the flue gas, a neutralizer such as hydrated lime or caustic soda, and activated coal may be dissolved in, added to, or suspended in the spraying water being ejected from the spray nozzle.

The term "organic halides" referred herein, contained in the flue gas, is a general indication of chemical compounds that are specified as the toxicity converted values by the guideline of cleaning plants by the Ministry of Health and Welfare, including: dioxins; precursors of dioxins; chlorobenzene, chlorophenol, PCBs, and the like, what is called the "relating materials"; and these compounds substituted in a part by halogen atom other than chlorine. Furthermore, the term "dioxins" is a general indication of polydibenzoparadioxine and polydibenzofuran, which are evaluated generally by the toxicity conversion concentration.

In the above-given description, the organic halides and the dioxins may be abbreviated to dioxins.

According to an aspect of the present invention described above, a bag filer unit provided with a cooling section is adopted for cooling a flue gas containing dust and for collecting dust therefrom, wherein the cooling section comprises a cooling means to cool the flue gas and a cooling space, being located beneath the dust collecting section comprising plurality of filter cloth. Thus, the effective performance described below is attained.
(1) A flue gas-cooling unit such as water-spray type temperature-reducing tower, which is necessary in prior art, can be eliminated, thus the installation area for the flue gas cooling unit is not necessary. As a result, significant space saving is attained, and the initial cost of the flue gas treatment plant is significantly reduced.
(2) If the means for cooling flue gas cools the flue gas to 200°C or below, preferably to 180°C or below, suppression of dioxins generation is expected. If, simultaneously, hydrated lime is added to the flue gas, the efficiency of removal of acidic ingredients such as HCl can further be increased.
(3) In prior art, water-spray type spray nozzle may induce trouble of wetting the filter cloth by letting the non-vaporized water droplets reach the filter cloth of the dust collecting section. However, the adoption of indirect heat exchanger, which introduces a cooling medium, as the cooling means avoids the trouble.
(4) The cooling means adopted a water-spray type spray nozzle that produces water droplets having 80 µm or smaller Sauter's mean diameter or having 160 µm or smaller maximum droplet diameter. As a result, fine water droplets are formed. Therefore, even when the cooling temperature is as low as 200°C or below, the water droplets are completely vaporized within very short vaporization time, thus the flue gas can be cooled within a short time, which avoids the possibility of wetting the filter cloth resulted from letting the non-vaporized water droplets reach the filter cloth at the dust collecting section.
(5) The cooling means adopted a spray nozzle that sprays hot water at its boiling point or above, thus instantaneously forming fine water droplets at the tip of the nozzle owing to the flash vaporization. Consequently, even when the cooling temperature is as low as 200°C or below, the water droplets are completely vaporized within very short vaporization time, thus the flue gas can be cooled within a short time, which avoids the possibility of wetting the filter cloth resulted from letting the non-vaporized water droplets reach the filter cloth at the dust collecting section.
(6) Two-fluid spray nozzle needs a compressor for ejecting air. To the contrary, a single-fluid spray nozzle according to the present invention needs no compressor, thus relatively inexpensive spray nozzle can be applied.
(7) Since the above-described hot water is sprayed at 140°C or above or 3.5 kgf/cm² or more, hot water with higher pressure can be obtained, and the flash vaporization effect on spraying into the flue gas is increased, which further assures the above-described functions of the present invention.
(8) Since plurality of spray nozzles are arranged in the peripheral direction of outer wall of the bag filter unit body at a specific interval, the flue gas cooling load for individual spray nozzles and the vaporization load within the space in the tower can be distributed to equalize, which further assures the performance of the present invention.
(9) In the dust collecting section, on applying shaking off the dust from the filter cloth at a predetermined interval, the water spray of the spray nozzles in the vicinity of the filter cloth under the shake off action is intermittently stopped until the shake off action of the filter cloth is ended. The action avoids the danger of abnormal spraying occurred from attaching the shook off and fallen dust to the ejection section of the spray nozzle, and avoids the danger of deposition of dust caused from wetting thereof with the sprayed water. Furthermore, since the above-described action is sequentially given to all the filter cloth and to the spray nozzles, the flue gas cooling can be stable conducted while completing the shaking off action to all the filter cloth.
(10) The cooling space was designed to assure the retention time of flue gas in the cooling space in a range of from 2 to 10 seconds. When the bag filter unit that has the cooling section described above is applied to satisfy each of the above-described requirements, the retention time of the flue gas in the cooling space of the cooling section, or the time necessary for cooling the flue gas, can be set in a range of from 2 to 10 seconds. As a result, the bag filter unit can be designed in a relatively small volume.

### (PREFERRED EMBODIMENT 2)

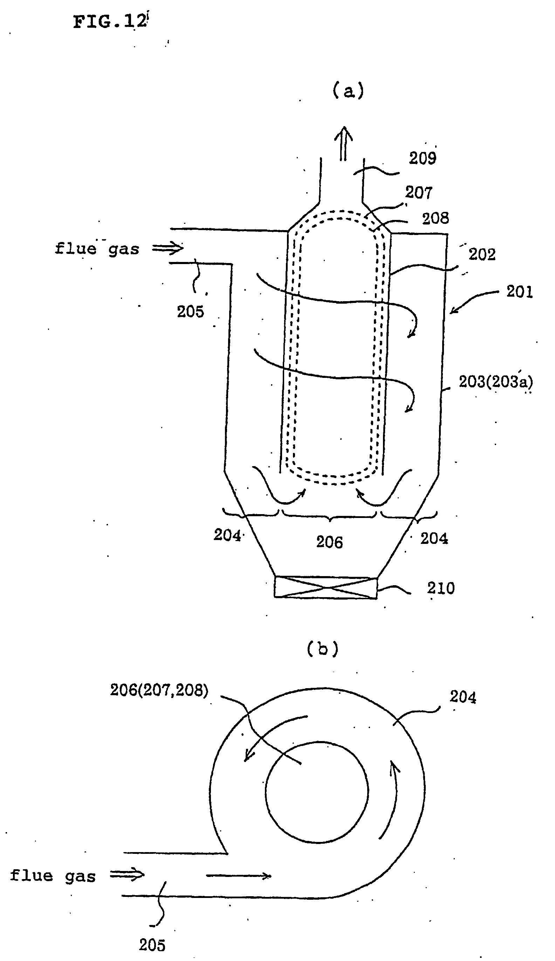

Fig. 12(a) and Fig. 12(b) show a schematic drawing of the Best Mode 2 according to the present invention, and a cross sectional view thereof, respectively. As shown in the figures, a flue gas temperature-reducing tower 201 that provided with a dust collecting section, comprises double cylinders, namely, an inner cylinder 202 and an outer cylinder 203. A flue gas introductory duct 205 is attached to the periphery of the outer cylinder 203 in tangential direction. The flue gas, which is introduced from the flue gas introductory duct, induces a swirling flow in an annular space between the outer cylinder 203 and the inner cylinder 202, thus conducting dust collection from the flue gas using the generated inertial force. (A dust collecting section 204 comprises the outer cylinder 203 and the inner cylinder 202.) In addition, a cooling section 206 is formed inside of the inner cylinder 202, which cooling section 206 comprises a cooling means that introduces the flue gas after removing dust therefrom into the inner cylinder 202 to cool thereof and a cooling space 208, (both the cooling means 207 and the cooling space 208 are shown schematically). The reference number 209 designates a flue gas vent duct positioned above the cooling means 207, and the reference number 210 designates a dust discharge section.

The flue gas temperature-reducing tower 201 that is provided with the dust collecting section 204 having above-described structure is described in more detail in the following.

The flue gas which was introduced into the tower from the flue gas introductory duct 205 which is attached tangentially to the upper periphery of the outer cylinder 203 (or a flue gas temperature-reducing tower body 3a), (at 250°C of flue gas temperature, for example), induces a swirling flow in an annular space formed between the outer cylinder 203 and the inner cylinder 202, in the dust collecting section 204. As a result, the dust in the flue gas falls down to the bottom while colliding against the walls by inertial force. Then, the dust is discharged to outside the system via a dust discharge section 210. The flue gas after removing the dust is introduced in the inner cylinder 202 via a flue gas passage beneath the inner cylinder 202. Then, a flue gas cooling means 207 in the cooling section 206 makes the flue gas stay in a cooling space 208. During the staying period, the flue gas is cooled to a temperature adequate to a succeeding acidic ingredients removing unit, installed separately, for example, to 180°C. The cooling means 207 may be an indirect heat exchanging means or a water-spray means using spray nozzle.

In this manner, the flue gas temperature-reducing tower 201 is structured in double cylinder type to form the dust collecting section 204 of annular shape between the inner cylinder 202 and the outer cylinder 203, relating to the inner cylinder 202 of the cooling section 206 using inertial force. Consequently, the dust collection unit such as cyclone necessary in prior art can be eliminated, thus eliminating the installation area for the dust collection unit. As a result, significant space saving is achieved, and the initial cost of the flue gas treatment plant is significantly reduced. Since the dust (fly ash) in flue gas is removed at the dust collecting section 204 before cooling the flue gas, the trouble of reducing the cooling efficiency of flue gas by attaching the dust to the cooling means 207 of the cooling section 206 and the trouble of dust deposition during cooling the flue gas at the cooling section 206 can be avoided. In addition, when the flue gas cooling means 207 cools the flue gas to 200°C or below, preferably to 180°C or below, the suppression of generation of dioxins is expected. At the same time, the efficiency for removing acidic ingredients such as HCl at a succeeding acidic ingredients removal unit separately installed can be increased.

The temperature of flue gas introduced to the flue gas temperature-reducing tower provided with the dust collecting section 204 shown in Fig. 12 is preferably designed to introduce the flue gas at 400°C or higher temperature and to collect the dust in the dust collecting section 204, then to cool the flue gas at the cooling section 207 down to 200°C or below.

According to the Best Mode 2, the dust (fly ash) which becomes a cause of generation of dioxins is preliminarily removed at a high temperature range of 400°C or above where very little dioxins are generated, more preferably at 450°C or above. Therefore, adding to the above-described effect, an advantage is attained to eliminate a dioxins removal unit, which is necessary in succeeding stage. Furthermore, according to the Best Mode 2, since the dust (fly ash) collected at above-described temperatures contains very little dioxins, the fly ash is not required to receive dioxins treatment, in some cases. In addition, since the flue gas is cooled at the cooling section 206 to 200°C or below, more preferably to 180°C or below, the generation of dioxins can be efficiently suppressed even if small amount of dust or dioxins are left in the flue gas.

### (PREFERRED EMBODIMENT 3)

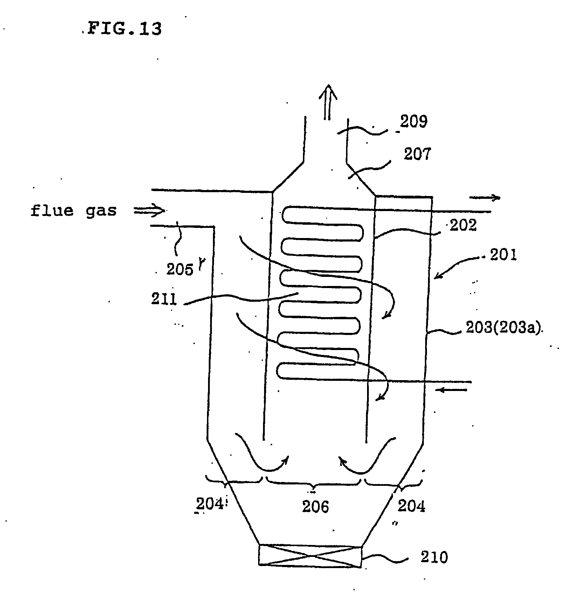

Fig. 13 shows a schematic drawing of the Best Mode 3 according to the present invention, in which the cooling means 207 of Fig. 12 comprises an indirect heat exchanger 211 positioned within the inner cylinder 202 to introduce a cooling medium therethrough. For the parts same as those in Fig. 12, no further description is given in the following.

The indirect heat exchanger 211, which allows passing cold water, air, or other cooling medium through the cooling pipes, is applied as the cooling means 207. The cooling means 207 is installed in the cooling section 206 in the inner cylinder 202 to conduct heat exchange indirectly with flue gas to cool the flue gas. The flue gas cooling performance depends generally on the total area of cooling pipes (effective area for heat exchange) and on the temperature and kind of the cooling medium. These variables are determined so as to attain the specified flue gas temperature. Since the flue gas contains dust, small amount of dust, which could not be removed in the dust collecting section 204, may attach to the cooling pipes of the indirect heat exchanger 211. To eliminate these trouble-inducing variables, the attached dust may be removed during a regular inspection, at need, or installing a steam or air type soot blower may carry out regular shake off of dust.

In this manner, according to the Best Mode 3, equivalent effect with that of Best Mode 2 is attained, and also an indirect heat exchanger 211 is adopted as the cooling means 207 to cool the flue gas, which indirect heat exchanger 211 allows cold water, cold air, and other cooling medium to pass through the cooling pipes. As a result, the Best Mode 3 can avoid trouble of flowing out non-vaporized water droplets to facilities outside of the system when a water-spray type spray nozzle of prior art is applied.

### (PREFERRED EMBODIMENT 4)

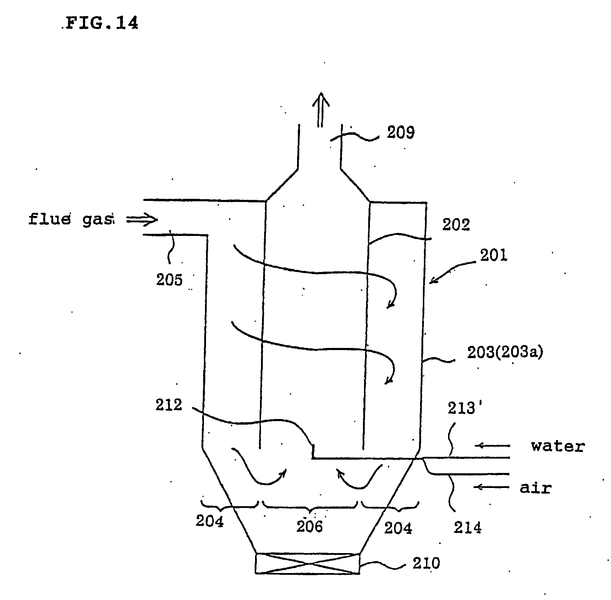

Fig. 14 shows a schematic drawing of the Best Mode 4 according to the present invention. The cooling means 207 of Fig. 12 comprises a water-spray type spray nozzle 212 producing water droplets having 80 µm or smaller Sauter's mean diameter or having 160 µm or smaller maximum droplet diameter, particularly a two-fluid spray nozzle which ejects cold water and air at a time. For the parts same as those in Fig. 12, no further description is given in the following.

Both the cold water supply pipe 213 and the air supply pipe 214 are connected to the spray nozzle 212, thus the cold water and the air are sprayed under respective predetermined pressures to spray specific amount of water necessary for cooling the flue gas to a specified temperature. Fig. 14 does not show pressure gauges for spray water and spray air, flow meters, check valves, and other parts, though these parts are mounted at adequate positions. The spray nozzle 212 has the spray performance to give the water droplets having 80 µm or smaller Sauter's mean diameter or having 160 µm or smaller maximum droplet diameter. Fig. 14 shows only one large capacity spray nozzle 212. However, plurality of spray nozzles, or four of them for example, may be arranged at an equal interval in the peripheral direction at lower part of the inner cylinder 202 while penetrating through the duct collection section 201.

The sprayed droplets have a distribution in terms of droplet diameter. For example, the distribution can be approximated by Rosin-Rammler distribution, semilogarithmic distribution, or in some cases normal distribution. The determination of droplet diameter is conducted by Laser-Doppler method (non-contact method) or conventional immersion method (direct sampling method). Commercially available spray nozzles often give various kinds of performance including Sauter's mean diameter. Since vaporization occurs on the surface of droplet, Sauter's mean diameter, which emphasizes the area, or area average diameter, is often adopted. Sauter's mean diameter (area average diameter) is often written as D32, which is calculated by Σ(nd³)/Σ(nd²). Smaller Sauter's mean diameter means wider outer surface area per unit weight, which means the increase in the vaporization rate to shorten the vaporization time.

Regarding the maximum droplet diameter, since the immersion method deals with finite number of droplets, the largest droplet diameter among the sampled droplets may be adopted. When the above-described distributions (weight or volume basis) are adopted for approximation, the diameter equivalent to that of 1% plus sieve may be adopted. Since larger water droplet takes longer time for vaporization, the calculation on the time until the whole of the sprayed water droplets is often based on the largest droplet diameter. That is, smaller maximum droplet diameter takes less vaporization time, and gives less retention time of the flue gas. Relating to the sprayed water droplets using a spray nozzle 212, the Sauter's mean diameter and the maximum droplet diameter have a range of ratios from 1 : 1.5 to 1 : 3. Accordingly, if either of the Sauter's mean diameter or the maximum droplet diameter is known, other one can be estimated to some degree.

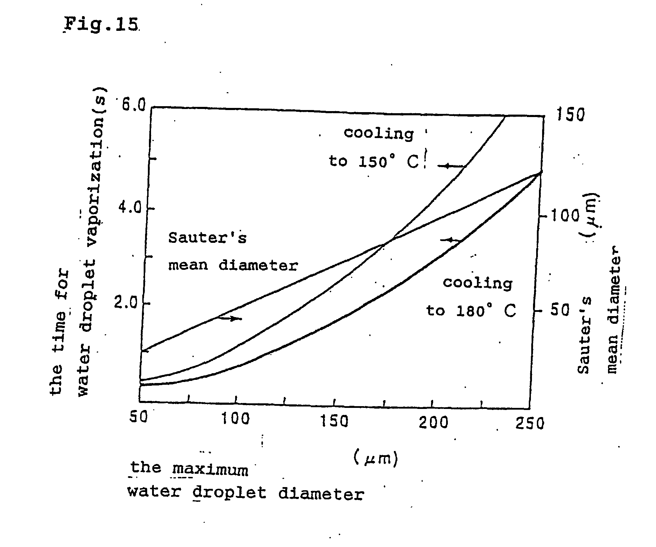

Fig. 15 is a graph of the relation between the maximum water droplet diameter and the time for water droplet vaporization, (an analytical result in one-dimensional flow field taking into account of the distribution of droplet diameter, the flue gas composition, and the like). The vertical axis at the right side indicates the case that the Sauter's mean diameter is half the maximum droplet diameter.

As seen in the figure, when the maximum droplet diameter or the Sauter's mean diameter becomes small, the time for vaporization becomes short, and when the flue gas cooling temperature becomes low, the vaporization time becomes long. If the cooling to 180°C is assumed at the maximum droplet diameter of 160 µm (Sauter's mean diameter of 80 µm), the time for vaporizing a water droplet becomes about 2 seconds. And, if the cooling to 150°C is assumed, the time becomes about 3 seconds. Since the time for vaporizing water droplet is the vaporization time in a stable field where no segregation flow of flue gas occurs, the calculation of the flue gas retention time necessary for cooling the flue gas in an actual apparatus needs to multiply a safety factor of around 1.5 to 3.

In this manner, the Best Mode 4 acquires similar effect with that in the Best Mode 2. Furthermore, the flue gas is cooled using a cooling means of water-spray type spray nozzle to give the water droplets having 80 µm or smaller Sauter's mean diameter or having 160 µm or smaller maximum droplet diameter, or fine droplets. Therefore, even when the cooling temperature is as low as 200°C or below, the water droplets are completely vaporized within very short vaporization time, thus non-vaporized water droplets are prevented from flowing out of the system to outside facilities. In addition, fine water droplets can quench the flue gas so that the generation of dioxins can be more effectively suppressed even when dioxins exist in the flue gas.

### (PREFERRED EMBODIMENT 5)

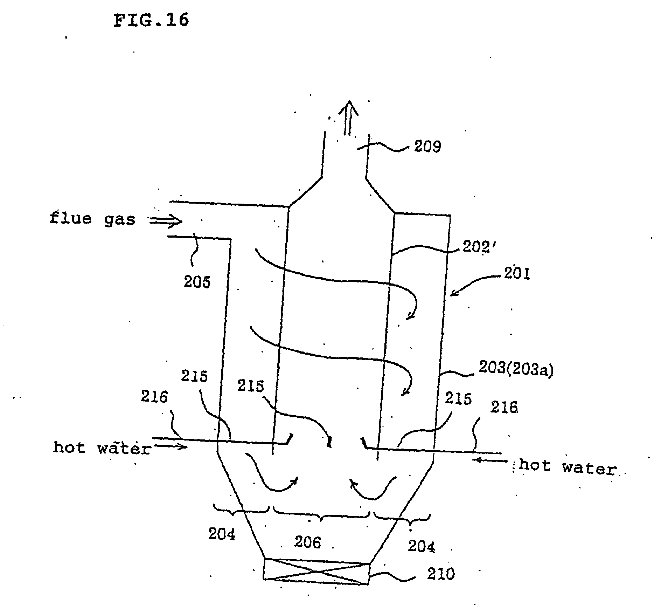

Fig. 16 shows a schematic drawing of the Best Mode 5 according to the present invention, in which the cooling means 207 of Fig. 12 comprises spray nozzles 215 being mounted on the inner wall to spray hot water at or above the water boiling point. For the parts same as those in Fig. 12, no further description is given in the following.

Hot water having 100°C or higher temperature, produced from high pressure steam in an additional facility, from external heating means, or the like is stored in a hot water tank (not shown). The hot water is then sprayed into a flue gas in the cooling space 208 via a connected single-flow spray nozzle 215. Although the hot water is 100°C or above, it can cool the flue gas owing to the large latent heat of vaporization. Under a condition of temperatures of 100°C or above and pressures of 1 kgf/cm² or more for the hot water, the spraying at the tip of the nozzle instantaneously creates fine droplets owing to the flash vaporization, which increases the flue gas cooling efficiency. Fig. 16 does not show pressure gauges for spray water and spray air, flow meters, check valves, and other parts, though these parts are mounted at adequate positions. The number of spray nozzles 215 differs with the cooling load of flue gas. For example, four spray nozzles (Fig. 16 shows three spray nozzles) are mounted in the peripheral direction at lower part of the inner cylinder 202, penetrating through the dust collecting section 201.

In this manner, according to the Best Mode 5, adding to the similar effect as in the case of Best Mode 2, the cooling means adopts a spray nozzle 215 that sprays hot water at its boiling point or above, or 100°C or above and 1 kgf/cm² or above, to cool the flue gas, thus instantaneously forming fine water droplets at the tip of the nozzle owing to the flash vaporization. Consequently, even when the cooling temperature is as low as 200°C or below, the water droplets are completely vaporized within very short vaporization time, thus the flue gas can be cooled within a short time, which avoids the possibility of flowing out the non-vaporized water droplets to facilities outside of the system. In addition, fine water droplets can quench the flue gas so that the generation of dioxins can be more effectively suppressed even when dioxins exist in the flue gas. Since the Best Mode 5 adopts the single-fluid spray nozzle 215, any compressor for spraying air, which is necessary in the case of two-fluid spray nozzle, is not required, thus relatively inexpensive spray nozzle can be applied.

The hot water (the one described in the Best Mode 2) which is sprayed into the cooling space 208, given in Fig. 16, preferably has temperatures of 140°C or above and pressures of 3.5 kgf/cm² or more.

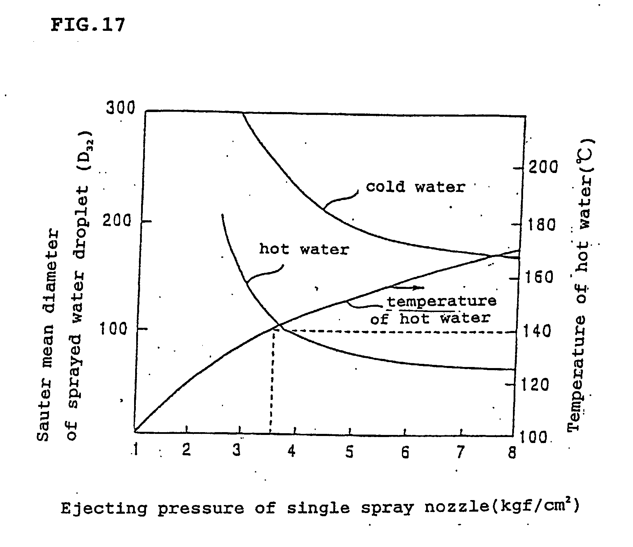

Fig. 17 shows a diagram of comparing the sprayed water droplet diameter between cold water (normal temperature) and hot water (at or above the water boiling point) using a single-fluid spray nozzle 215.

The figure shows that the sprayed hot water forms smaller Sauter's mean diameter by half or less that of cold water, and that the hot water spray can form finer water droplets. Furthermore, it was found that 3.5 kgf/cm² of ejection pressure of the hot water gives near 140°C of the hot water temperature giving 100 µm or smaller Sauter's mean diameter. In other words, to obtain fine water droplets stable, the pressure of the hot water tank (not shown) for producing the hot water or for storing thereof is preferably 3.5 kgf/cm² or more (140°C or higher temperature).

In this manner, when the ejecting hot water is prepared at 140°C or above or 3.5 kgf/cm² or more, hot water with higher pressure can be obtained, and the flash vaporization effect on spraying into the flue gas is increased, which further assures the functions in the Best Mode 4. If the temperature becomes lower than 140°C or the pressure becomes lower than 3.5 kgf/cm², satisfactory pressure may not be obtained with a known spray nozzle, for example, as the means for spraying hot water, which may induce trouble in obtaining necessary amount of water spray. Furthermore, when heat dissipation occurs in a passage or the like for supplying hot water to the hot water spray means, sufficient spraying of hot water may not be obtained. Consequently, if the water is above the boiling point, or 100°C or above or 1 kgf/cm² or more, the degree of performance only degrades to some extent, though these conditions are not positively recommended.

### (PREFERRED EMBODIMENT 6)

In the Best Modes 2 through 5, the flue gas temperature-reducing tower 201 provided with the dust collecting section 204 preferably has the cooling space 208 so as the retention time of flue gas therein to become 2 to 10 seconds.

When the flue gas temperature-reducing tower 201 provided with the dust collecting section 204 is designed to satisfy individual requirements given in the Best Modes 3 through 5, the retention time of the flue gas in the cooling space 208 of the cooling section 206, or the time necessary for cooling the flue gas, can be set in a range of from 2 to 10 seconds. As a result, the flue gas temperature-reducing tower can be designed in a relatively small volume.

The retention time of the flue gas of less than 2 seconds is not preferable because the cooling effect by the above-described various kinds of cooling means 207 cannot fully be attained, and because, if the water spray is conducted by a spray nozzle, there is a possibility of generation of non-vaporized water droplets. The retention time of the flue gas of more than 10 seconds is not preferable because the volume of the flue gas cooling space 208 becomes excessively large to result in excessively large size of the temperature-reducing tower 201, which leads the compact design effect of the present invention relatively small. If, however, the installation area has a margin, the upper limit of the 10 seconds of retention time is not necessarily applied. Since the setting of the retention time of flue gas, or the setting of the volume of cooling space 208, is affected also by the cooling temperature of the flue gas, further cooling to a lower temperature preferably adopts longer retention time of the flue gas within a range of from 2 to 10 seconds.

Several modes for carrying out the present invention were described above referring to Figs. 12 through 17. The following is supplemental description thereof.

The dust collecting section 204 of the flue gas temperature-reducing tower 201 according to the Best Mode 6 adopts only one flue gas introductory duct 205 in tangential direction in periphery of the tower 201. The number of the duct 205 may be, however, two in opposite direction thereat. That is, the constitution may be the one that the dust collecting section 204 creates a swirling flow to conduct inertial force dust collection. In addition, a guide vane or a distribution plate may be installed at the flue gas introduction section of the dust collecting section 204. Furthermore, a knocker or a vibrator may be mounted on the wall of the outer cylinder to shake off dust (fly ash) attached to the inner wall of the outer cylinder of the dust collecting section 204.

The spray nozzle mounted to the cooling section 206 according to the Best Mode 6 adopted a two-fluid spray nozzle that sprays cold water (normal temperature water) and air at a time. However, when the pressure of the spraying water is raised to 10 kgf/cm² or more, a single-fluid spray nozzle may be applied because fine water droplets can be formed. When hot water is sprayed, a single-fluid spray nozzle was adopted. However, a two-fluid spray nozzle that sprays hot water and air at a time may be applied. In that case, the two-fluid spray nozzle forms water droplets as fine as or finer than those formed by the single-fluid spray nozzle.

The spray nozzle mounted in the cooling section 206 according to the Best Mode 6 may have a protective pipe on outer periphery thereof to assure the durability of the nozzle. Furthermore, dust deposition on the nozzle can be avoided by ejecting purge air between the nozzle and the protective pipe, or by simply ejecting purge air from outer periphery or nearby the nozzle. The volume of ejecting water or hot water from the spray nozzle is controlled by a feedback controller or the like to establish a specified temperature of the cooled flue gas while monitoring the temperature at the outlet of the dust collecting section 204. Alternatively, feed forward control or combined control method can also be applied. To remove acidic ingredients and dioxins from the flue gas, a neutralizer such as hydrated lime or caustic soda, and activated coal may be dissolved in, added to, or suspended in the spraying water to eject from the spray nozzle.

The term "organic halides" referred herein, existing in the flue gas, is a general indication of chemical compounds that are specified as toxicity converted values by the guideline of cleaning plants by the Ministry of Health and Welfare, including: dioxins; precursors of dioxins; chlorobenzene, chlorophenol, PCBs, and the like, what is called the "relating materials"; and these compounds substituted in a part by halogen atom other than chlorine. Furthermore, the term "dioxins" is a general indication of polydibenzoparadioxine and polydibenzofuran, which are evaluated generally by the toxicity conversion concentration.

In the above-given description, the organic halides and the dioxins may be abbreviated to dioxins.

As described above, the Best Mode 6 relates to a flue gas temperature-reducing tower that cools flue gas containing dust and collects the dust therefrom, and the flue gas temperature-reducing tower comprises double cylinders, or an inner cylinder and an outer cylinder. According to the Best Mode 6, a flue gas introductory duct is mounted to the periphery of outer cylinder in tangential direction thereof, thus letting the flue gas swirling between the outer cylinder and the inner cylinder to form a dust collecting section which collects dust in the flue gas by inertial force. Furthermore, a cooling section is formed, which cooling section comprises a cooling means to introduce the flue gas after removing dust therefrom into the inner cylinder, and a cooling space. By the configuration, additionally required dust collection unit such as cyclone, applied in prior art, is eliminated, and the area for installing the dust collection unit can also be eliminated. As a result, significant space saving is achieved, and the initial cost of the flue gas treatment plant is significantly reduced.

Since the dust (fly ash) in flue gas is removed at the dust collecting section before cooling the flue gas, the trouble of reducing the cooling efficiency of flue gas by attaching the dust to the cooling means of the cooling section 206 and the trouble of dust deposition during cooling the flue gas at the cooling section can be avoided. In addition, when the flue gas cooling means cools the flue gas to 200°C or below, preferably to 180°C or below, the suppression of generation of dioxins-is expected. At the same time, the efficiency for removing acidic ingredients such as HCl at succeeding acidic ingredients removal unit separately installed can be increased.

According to the Best Mode 6, the above-described flue gas temperature-reducing tower introduces the flue gas at 400°C or higher temperature to collect dust in the dust collecting section, and the cooling section cools the flue gas to 200°C or below. According to the Best Mode 6, the dust (fly ash) which becomes a cause of generation of dioxins is preliminarily removed at a high temperature range of 400°C or above where very little dioxins are generated, more preferably at 450°C or above. Therefore, adding to the above-described effect, an advantage is attained to eliminate or simplify a dioxins removal unit, which is necessary in succeeding stage. Furthermore, since the dust (fly ash) collected at above-described temperatures contains very little dioxins, the fly ash is not required to receive dioxins treatment, or required only a simple treatment. In addition, since the flue gas is cooled at the cooling section 206 to 200°C or below, more preferably to 180°C or below, the generation of dioxins can be efficiently suppressed even if small amount of dust or dioxins are left in the flue gas.

According to the Best Mode 6, since the cooling means adopts an indirect heat exchanger to introduce a cooling medium, trouble of flowing out the non-vaporized water droplets from the system to outside facilities is avoided, which trouble may occur during cooling flue gas with a conventional water-spraying type spray nozzle.

According to the Best Mode 6, the cooling means comprises a water-spray type spray nozzle that produces water droplets having 80 µm or smaller Sauter's mean diameter or having 160 µm or smaller maximum droplet diameter. Since the sprayed water during cooling the flue gas becomes fine droplets, they are completely vaporized in very short time even if the cooling temperature is as low as 200°C or below. As a result, trouble of flowing out the non-vaporized water droplets from the system to outside facilities is avoided. Since fine water droplets quench the flue gas, the generation of dioxins is more effectively suppressed even when the flue gas contains dioxins.

Furthermore, the cooling means according to the Best Mode 6 comprises a spray nozzle that sprays hot water at or above the boiling point of water, thus forming instantaneously fine water droplets at the tip of the nozzle owing to the flash vaporization. Consequently, even when the cooling temperature is as low as 200°C or below, the water droplets are completely vaporized within very short vaporization time, thus the flue gas can be cooled within a short time, which avoids the possibility of flowing out the non-vaporized water droplets from the system to outside facilities. In addition, since fine water droplets quench the flue gas, the generation of dioxins is more effectively suppressed even when the flue gas contains dioxins. Furthermore, since a single-fluid spray nozzle is adopted, any compressor for spraying air, which is necessary in the case of two-fluid spray nozzle, is not required, thus relatively inexpensive spray nozzle can be applied.

According to the Best Mode 6, the above-described hot water is sprayed at 140°C or above or 3.5 kgf/cm² or more. Consequently, hot water with higher pressure can be obtained, and the flash vaporization effect on spraying into the flue gas is increased, which further assures the above-described effect.
According to the Best Mode 6, the cooling space was designed to assure the retention time of flue gas therein in a range of from 2 to 10 seconds. When the flue gas temperature-reducing tower provided with the dust collecting section is applied to satisfy each of the above-described requirements, the retention time of the flue gas in the cooling space of the cooling section, (or the time necessary for cooling the flue gas), can be set to a range of from 2 to 10 seconds. As a result, the bag filter unit can be designed in a relatively small volume.

## Claims

1. An apparatus for cooling and collecting flue gas containing dust comprising:
a flue gas introductory duct, connected with lower part of the apparatus for cooling and collecting flue gas containing dust;
a cooling section located at lower part of the apparatus for cooling and collecting flue gas and located at downstream side of the flue gas introductory duct towards a flow direction of the flue gas, the cooling section comprising,
means for cooling the flue gas,
a cooling space having the cooling means inside of the cooling space,
a dust collecting section located at upper part of the apparatus for cooling and collecting the flue gas and located at downstream side of the cooling section towards the flow direction of the flue gas, the dust collecting section having,
a bag filter having a plurality of filter cloth for collecting the dust contained in the flue gas;
a flue gas discharge duct connected with upper part of the apparatus for cooling and collecting the flue gas and located at downstream side of the dust collecting section towards the flow direction of the flue gas; and
a dust discharge section for discharging collected dust.

2. The apparatus according to claim 1, wherein the means for cooling the flue gas comprises an indirect heat exchanger which is located in the cooling space and which introduces a cooling medium to flow inside of the indirect heat exchanger.

3. The apparatus according to claim 1, wherein the means for cooling the flue gas comprises at least one spray nozzle mounted on an outer wall of the cooling section.

4. The apparatus according to claim 1, wherein the means for cooling the flue gas comprises a plurality of spray nozzles mounted on an external wall of the cooling section at a definite interval.

5. The apparatus according to claim 1, wherein the dust collecting section comprises means for removing dust for shaking off the dust deposited on the filter cloth.

6. A method for cooling and collecting flue gas containing dust comprising the steps of:
cooling the flue gas containing dust in a cooling space by introducing a cooling medium to pass through inside of cooling pipes to exchange heat indirectly between the flue gas passing trough outside of the cooling pipes and the cooling medium ;
collecting the dust from the cooled flue gas, using a filter cloth; and
removing the dust from the filter cloth by shaking off.

7. The method according to claim 6, wherein the step of cooling the flue gas comprises indirectly exchanging heat in the cooling space between the cooling medium passing trough inside of the cooling pipes and the flue gas passing trough outside of the cooling pipes.

8. The method according to claim 6, wherein the step of cooling the flue gas comprises spraying water through at least one spray nozzle to form sprayed droplets having 80 µm or less of Sauter average diameter or having 160 µm or less of maximum diameter.

9. The method according to claim 6, wherein the step of cooling the flue gas comprises spraying hot water through at least one spray nozzle, not less than at a water boiling point.

10. The method according to claim 6, wherein the step of cooling the flue gas comprises spraying hot water at not less than 140°C, or at not less than 3.5 kgf/cm² .

11. The method according to claim 6, wherein the step of removing the dust by shaking the filter cloth comprises a successive operation for all the filter cloth and the spray nozzles, to intermittently stop spraying water through a spray nozzle in the vicinity of the filter cloth, in a successive action for shaking off the dust for individual filter cloth, using the means for removing dust at a definite interval, until the dust removal form the filter cloth being completed.

12. The method according to claim 6, wherein the step of cooling the flue gas comprises having a volume of the cooling space so as the flue gas to remain for a period of from 2 to 10 seconds.

13. An apparatus for cooling and collecting flue gas containing dust comprising:
a temperature-reducing tower having double cylinders consisting of an inner cylinder and an outer cylinder, the inner cylinder and the outer cylinder being located concentrically each other;
a flue gas introductory duct, being connected with upper part of the outer cylinder, and being located in tangential direction to periphery of the outer cylinder;
a dust collecting section having an annular space formed between the inner cylinder and the outer cylinder;
a passage section for introducing the flue gas into the inner cylinder, being located at lower part of the inner cylinder; and
means for cooling the flue gas, having a cooling space to cool the flue gas after removing the dust.

14. The apparatus according to claim 13, wherein the means for cooling the flue gas comprises an indirect heat exchanger being located in the inner cylinder to pass a cooling medium inside of the heat exchanger.

15. The apparatus according to claim 13, wherein the means for cooling the flue gas comprises a spray nozzle being mounted on a wall of the inner cylinder to spray water.

16. A method for cooling and collecting flue gas containing dust comprising the step of:
turning the flue gas containing dust in an annular space formed between a double cylinder, or between an outer cylinder and an inner cylinder, to collect the dust from the flue gas by induced inertial force; and
cooling the flue gas after removing the dust by introducing the flue gas.

17. The method according to claim 16, wherein the step of collected dust comprises introducing the flue gas containing dust, at temperatures of 400°C or more, to a dust collecting section.

18. The method according to claim 16, wherein the step of cooling the flue gas comprises the step of cooling the flue gas, after removing dust, to 200°C or less in a cooling section.

19. The method according to claim 16, wherein the step of cooling the flue gas comprises the step of spraying water to form sprayed droplets having not more than 80 µm of Sauter average diameter or having not more than 160 µm of maximum diameter.

20. The method according to claim 16, wherein the step of cooling the flue gas comprises the step of spraying hot water at 140°C or more of temperature, or at 3.5 kgf/cm² or more of pressure.

21. The method according to claim 16, wherein the step of cooling the flue gas comprises the step of having a volume of the cooling space so as the flue gas to remain for a period of from 2 to 10 seconds.
